# EUROPEAN PATENT SPECIFICATION

(11) **EP 3 595 496 B1**
(45) Date of publication and mention of the grant of the patent: **06.10.2021**
(21) Application number: 18767003.9
(22) Date of filing: 16.03.2018
(51) Int. Cl.: A47J 31/02, A47J 31/46

(54) **AUTOMATIC POUR OVER COFFEE MAKER**
AUTOMATISCHE KAFFEEBRÜHMASCHINE
CAFETIÈRE À EXTRACTION PAR FILTRE AUTOMATIQUE

(30) Priority: 17.03.2017 US 201762472672 P
(43) Date of publication of application: 22.01.2020
(73) Proprietor: EnE Holdings Ltd, N.T., Hong Kong (HK)
(72) Inventor: CHEN, Yuen Chin Andrew, Hong Kong (CN); WONG, Wai Ming Raymond, Hong Kong (CN); LEUNG, Tak Fung Dick, Hong Kong (CN); CHENG, Pui Yin Amy Decem, Hong Kong (CN); TAY, Kok Leong Jeremy, Hong Kong (CN)
(74) Representative: Lecca, Patricia S.
(86) International application number: PCT/IB2018/051768
(87) International publication number: WO 2018/167726

(56) References cited:
- CN-A- 103 919 467
- CN-A- 105 030 068
- CN-A- 105 640 337
- CN-A- 105 662 150
- CN-U- 205 031 059
- CN-Y- 2 810 437
- KR-A- 20130 022 750
- KR-A- 20150 050 180
- US-A1- 2014 272 047
- US-A1- 2014 318 377

## Description

### FIELD OF THE INVENTION

This invention relates generally to the field of coffee makers.

### BACKGROUND OF THE INVENTION

Currently, there is no coffee makers that could reproduce manual pouring action over coffee ground when making pour over coffee. In fact, there is no electric coffee makers that could replicate manual pouring action over coffee ground.

The housing of current coffee makers requires expensive procedures to make and tedious process to assemble. The housings usually do not allow light to pass through so that one could not easily observe the process when hot water flow through the coffee ground.

Document US 2014/272047 A1 discloses a coffee maker comprising a top housing connected to a bottom housing via a plurality of connecting elements such that the top housing is enacted above the bottom housing; a water tank positioned on top of the top housing; a carafe to be placed under said top housing, said carafe comprises an upper part having a brewing cone; and a rotating spout located at the bottom of said top housing and above said carafe for pouring hot water into said carafe.

To overcome the limitations of the existing coffee makers, this invention provides a pour over coffee maker with automatic pour over function.

### SUMMARY OF THE INVENTION

This invention provides a coffee maker as defined in claim 1.

The invention provides a coffee maker comprising (i) a top housing **(2)** connected to a bottom housing (**3**) via a plurality of connecting elements (**4**) such that the top housing is enacted above the bottom housing, (ii) a water tank (**1**) positioned on top of the top housing, (iii) a carafe (**5**) to be placed under said top housing, said carafe comprises an upper part having a brewing cone (**51**), and (iv) a rotating spout (**6**) located at the bottom of said top housing and above said carafe for pouring hot water into said carafe.

In one embodiment, the rotating spout of the present coffee maker is driven by a motor when a temperature sensor detects a specified temperature in the water tank. In one embodiment, the rotating spout is driven to rotate concentrically above said brewing cone.

According to the invention, the connecting elements are connected to said top housing and bottom housing by an interlock system. Said locking system comprises (i) a hook-like feature (**41**) located on both ends of the connecting elements and (ii) a piece of interlock (**21**) located adjacent to a wall of the top housing or bottom housing.

### BRIEF DESCRIPTION OF THE FIGURES

**Figure 1** shows an isometric view of an embodiment of this invention having a water tank (**1**) on a top housing (**2**) connected to a bottom housing (**3**) via a plurality of connecting elements (**4**) to form a space between the top housing (**2**) and bottom housing (**3**) to house a carafe (**5**).
**Figure 2** shows a cross-section of the coffee maker. At the bottom of the top housing is a rotating spout (**6**), and the upper part of the carafe comprises a brewing cone (**51**).
**Figure 3** shows a mechanism for controlling the rotating spout. A rotate spout drive motor (**61**) drives a first rotate spout drive gear (**62**) which in turn drives a second rotate spout gear (**63**) to cause the spout to rotate.
**Figure 4A** shows a system (**7**) for controlling water supply to the rotating spout. A spout valve drive motor (**71**) drives a spout valve cam (**72**) that pushes on a spout valve lever (**73**) to act on a spout valve body (**74**). The valve is shown in an open position.
**Figure 4B** shows the same system as in **Figure 4A** for controlling water supply to the rotating spout, with the valve in a closed position.
**Figure 5A** shows an interlocking system for connecting the plurality of connecting elements (**4**) to the top housing (**2**) in unlocked position. A hook-like feature (**41**) is inserted into each of the holes on the wall of the top housing. Adjacent to the wall of the top housing is a piece of interlock (**21**).
**Figure 5B** shows the same interlocking system as in **Figure 5A** in a locked position.
**Figure 5C** shows an interlocking system for connecting the plurality of connecting elements (**4**) to the bottom housing (**3**) in an unlocked position. A hook-like feature (**41**) is inserted into each of the holes on the wall of the bottom housing. Adjacent to the wall of the bottom housing is a piece of interlock (**31**).
**Figure 5D** shows the same interlocking system as in **Figure 5C** in a locked position.

### DETAILED DESCRIPTION OF THE INVENTION

In one embodiment, this invention provides a coffee maker having an easily assembled housing and rotating spout.

The coffee maker of this invention comprises: a water tank (**1**) on a top housing (**2**) connected to a bottom housing (**3**); the bottom of the top housing comprises a rotating spout (**6**) ; the bottom housing (**3**) comprises a power switch and a control board; a carafe (**5**) configured to be placed on the bottom housing, wherein the carafe comprises a brewing cone (**51**) that can be removably attached to an upper part of the carafe; and a plurality of connecting elements each having two ends; wherein the connecting element connects to the top housing at one end and to the bottom housing at another end such that the top housing is enacted above the bottom housing.

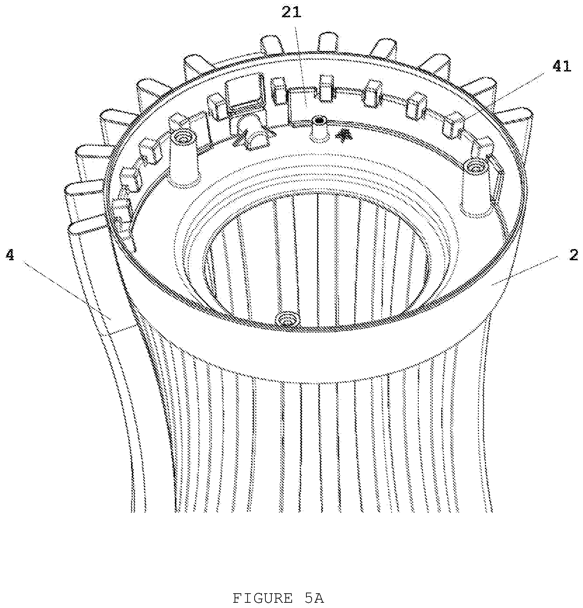

The connecting element is connected to the top housing and the bottom housing by an interlock system as shown in **Figures 5A-D**. The interlock system comprises a structure on each of the two ends of the connecting elements for insertion into the top housing and the lower housing where an interlock structure will snug fit onto each of the structures on the connecting elements. The structure on the connecting element is a hook to be inserted into corresponding holes on the top housing and bottom housing. Each of the top housing and bottom housing has one or more pieces of interlock that are snug fitted to below the hooks for locking the connecting elements in place.

In one embodiment, interlocking the connecting elements with the top housing and bottom housing requires less time than assembling a traditional coffee maker housing.

In one embodiment, the number, shape, and/or spacing of the connecting elements can be tailored to optimize the amount of light available for viewing the brewing process in the top part of the carafe.

In one embodiment, the connecting element is made of wood, metal, glass, plastic, leather or die cast.

In another embodiment, the connecting element is made of transparent material.

In one embodiment, the connecting element is curved. In another embodiment, the connecting element is straight.

In one embodiment, the brewing cone is enclosed in a case made of transparent material.

In one embodiment, the carafe is made of transparent material.

In one embodiment, the bottom housing comprises a keep warm system.

In one embodiment, the rotating spout rotates concentrically above the brewing cone when water from the water tank is dispensed onto the brewing cone through the rotating spout.

In one embodiment, the rotating spout comprises an outlet which opens horizontally.

In one embodiment, the rotating spout comprises an outlet which opens diagonally.

In one embodiment, the rotating spout is driven by a motor.

In one embodiment, the water tank comprises a temperature sensor, wherein the rotating spout is driven by a motor when the temperature sensor detects a specified temperature in the water tank. In another embodiment, the specified temperature can be controlled by a user. In one embodiment, the water tank is placed on top of the brewing cone so that water at the specified temperature can be directly released onto ground coffee so as to meet stringent coffee brewing requirements such as SCAA.

In one embodiment, the water tank is made of a transparent material.

In one embodiment, the water tank comprises a heating system, a valve and a temperature sensor, wherein when the temperature sensor detects water temperature in the water tank reaches a specified temperature, the heating system is turned off and the valve is opened to allow hot water to flow to the brewing cone via the rotating spout.

This invention provides a coffee maker with a rotating spout.

In one embodiment, the coffee maker comprises:a water tank on a top housing and a rotating spout; a bottom housing comprising a brewing cone; wherein the rotating spout rotates concentrically above the brewing cone when water from the water tank is dispensed onto the brewing cone through the rotating spout.

In one embodiment, the rotating spout comprises an outlet which opens horizontally.

In one embodiment, the rotating spout comprises an outlet which opens diagonally.

In one embodiment, the rotating spout is driven by a motor.

In one embodiment, the water tank comprises a temperature sensor, wherein the motor drives the rotating spout when the temperature sensor detects a specified temperature in the water tank.

In one embodiment, the water tank is made of a transparent material.

In one embodiment, the brewing cone is made of a transparent material. In another embodiment, the brewing cone is made of plastic, steel or die cast.

In one embodiment, the rotating spout is made of a transparent material. In another embodiment, the rotating spout is made of plastic, steel or die cast.

In one embodiment, the water tank comprises a heating system, a valve and a temperature sensor, wherein, when the valve detects water temperature in the water tank reaches a specified temperature, the heating system is turned off and the valve opens so that hot water will flow to the brewing cone via the rotating spout.

This invention also provides a coffee maker having an easily assembled housing.

In one embodiment, the coffee maker comprises: a water tank on a top housing ; a bottom housing; a plurality of connecting elements each having two ends; wherein the connecting element connects to the upper structure at one end and the base structure at the other end such that the upper structure is enacted above the base structure.

The connecting element is connected to the upper structure and the base structure by an interlock system as shown in **Figures 5A-D**.

In one embodiment, the connecting element is made of wood, metal, glass, plastic, leather or die cast.

In another embodiment, the connecting element is made of transparent material.

In one embodiment, the connecting element is curved. In another embodiment, the connecting element is straight.

In one embodiment, the coffee maker further comprises a brewing cone and a carafe that can be connected to form a single structure. In another embodiment, the brewing cone is made of transparent material. In yet another embodiment, the carafe is made of transparent material. In another embodiment, the brewing cone and carafe are connected to form a hour-glass structure.

In one embodiment, the base structure comprises a keep warm system.

In one embodiment, interlocking the connecting elements with the upper structure and lower structure via the interlock system requires less time than assembling a traditional coffee maker housing. The interlock system comprises a structure on each of the two ends of the connecting elements for insertion into the upper structure and the base structure where an interlock structure that snug fit onto each of the structures on the connecting elements. The structure on the connecting element is a hook to be inserted into corresponding holes on the upper and base structures. Each of the upper and base structures has one or more pieces of interlock that are snug fitted to below the hooks for locking the connecting elements in place.

In one embodiment, the number, shape, spacing of the connecting elements can be tailored to optimize the amount of light entering the housing for viewing of the brewing process.

The present invention provides a coffee maker comprising (i) a top housing (**2**) connected to a bottom housing (**3**) via a plurality of connecting elements (**4**) such that the top housing is enacted above the bottom housing, (ii) a water tank (**1**) positioned on top of the top housing, (iii) a carafe (**5**) to be placed under the top housing, the carafe comprises an upper part having a brewing cone (**51**), and (iv) a rotating spout (**6**) located at the bottom of the top housing and above the carafe for pouring hot water into the carafe. In one embodiment, the water tank is made of a transparent material. In another embodiment, the water tank comprises a heating system, a valve and a temperature sensor, wherein when the temperature sensor detects a specified temperature, the heating system is turned off and the valve is opened to allow hot water flowing via the rotating spout.

In one embodiment, the rotating spout of the present coffee maker is driven by a motor when a temperature sensor detects a specified temperature in the water tank. In one embodiment, the rotating spout is driven to rotate concentrically above the brewing cone.

In one embodiment, the rotating spout comprises an outlet which opens horizontally. In another embodiment, the rotating spout comprises an outlet which opens diagonally.

In one embodiment, the bottom housing comprises a keep warm system.

In one embodiment, the connecting elements are made of wood, metal, glass, plastic, leather or die cast. In another embodiment, the connecting elements are made of transparent material. The connecting elements can be curved or straight.

The connecting elements are connected to the top housing and bottom housing by an interlock system. The locking system comprises (i) a hook-like feature **(41)** located on both ends of the connecting elements and (ii) a piece of interlock (**21**) located adjacent to a wall of the top housing or bottom housing.

The invention provides a coffee maker comprising: a top housing (**2**) connected to a bottom housing (**3**) via a plurality of connecting elements (**4**) such that the top housing is enacted above the bottom housing; a water tank (**1**) positioned on top of the top housing; a carafe (**5**) to be placed under the top housing, the carafe comprises an upper part having a brewing cone (**51**); and a rotating spout (**6**) located at the bottom of the top housing and above the carafe for pouring hot water into the carafe.

In one embodiment, the water tank is made of a transparent material.

In one embodiment, the water tank comprises a heating system, a valve and a temperature sensor, wherein when the temperature sensor detects a specified temperature, the heating system is turned off and the valve is opened to allow hot water flowing via the rotating spout.

In one embodiment, the rotating spout is driven by a motor when a temperature sensor detects a specified temperature in the water tank.

In one embodiment, the rotating spout is driven to rotate concentrically above the brewing cone.

In one embodiment, the rotating spout comprises an outlet which opens horizontally.

In one embodiment, the rotating spout comprises an outlet which opens diagonally.

In one embodiment, the bottom housing comprises a keep warm system.

In one embodiment, the plurality of connecting elements are made of wood, metal, glass, plastic, leather or die cast.

In one embodiment, the plurality of connecting elements are made of transparent material.

In one embodiment, the plurality of connecting elements are curved.

In one embodiment, the plurality of connecting elements are straight.

The plurality of connecting elements are connected to the top housing and bottom housing by an interlock system. The interlock system comprises a hook-like feature (**41**) located on both ends of each of the plurality of connecting elements, a plurality of holes on the top housing and bottom housing corresponding to each of the plurality of connecting elements (**4**), and a piece of interlock (**21**) located adjacent to a wall of the top housing or bottom housing.

The invention will be better understood by reference to the Example which follows, but those skilled in the art will readily appreciate that the specific examples are for illustrative purposes only and should not limit the scope of the invention which is defined by the claims which follow thereafter.

It is to be noted that the transitional term "comprising", which is synonymous with "including", "containing" or "characterized by", is inclusive or open-ended and does not exclude additional, un-recited elements or method steps.

### EXAMPLE

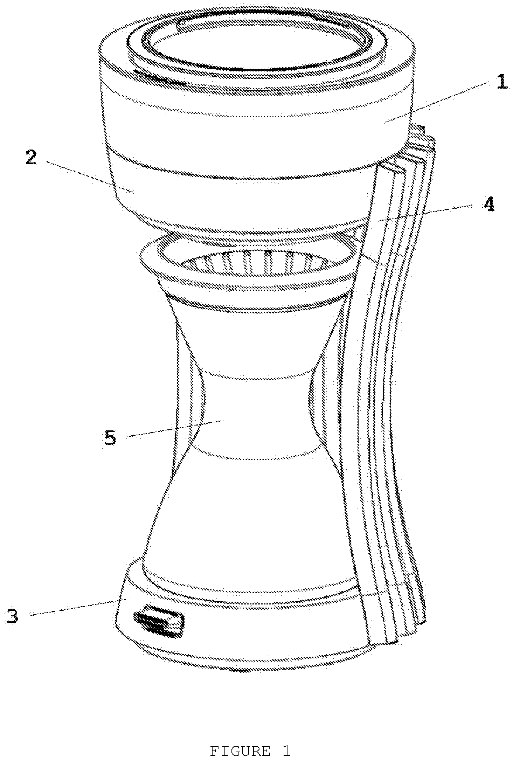

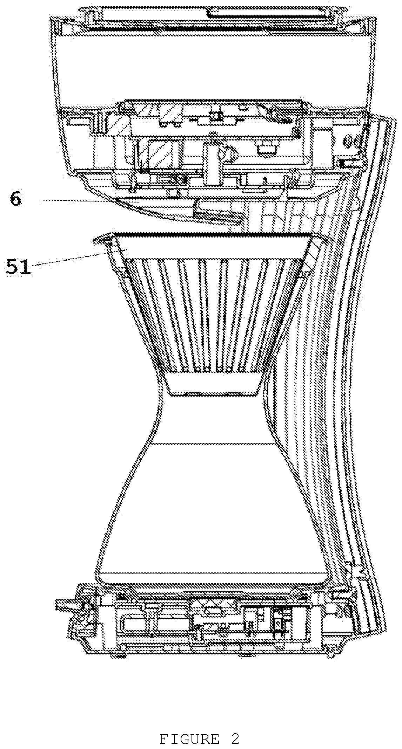

**Figure 1** shows an isometric view of an embodiment of this invention. The coffee maker comprises a water tank (**1**) on a top housing (**2**) connected to a bottom housing (**3**) via a plurality of connecting elements (**4**) to form a space between the top housing (**2**) and bottom housing (**3**) to house a carafe (**5**). At the bottom of the top housing is a rotating spout (**6**) to imitate manual pouring of hot water into the carafe. The carafe (**5**) comprises an upper part having a brewing cone (**51**) and a lower part for receiving brewed coffee. Coffee ground is placed inside the brewing cone and hot water from the rotating spout will pour over and percolates the coffee ground. The water tank (**1**) comprises a heating system, a valve and a temperature sensor, wherein when the temperature sensor detects water temperature in the water tank reaches a specified temperature, the heating system is turned off and the valve is opened to allow hot water to flow to the brewing cone via the rotating spout. **Figure 2** is a cross-section of the coffee maker showing the spatial relationship of these components.

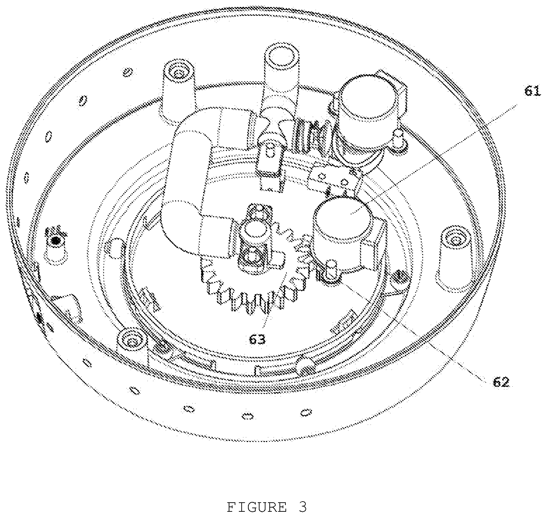

**Figure 3** shows the mechanism for controlling the rotating spout (**6**). A rotate spout drive motor (**61**) drives a rotate spout drive gear (**62**) which in turn drives a rotate spout gear (**63**) to cause the spout to rotate when the rotate spout drive motor (**61**) is turned on.

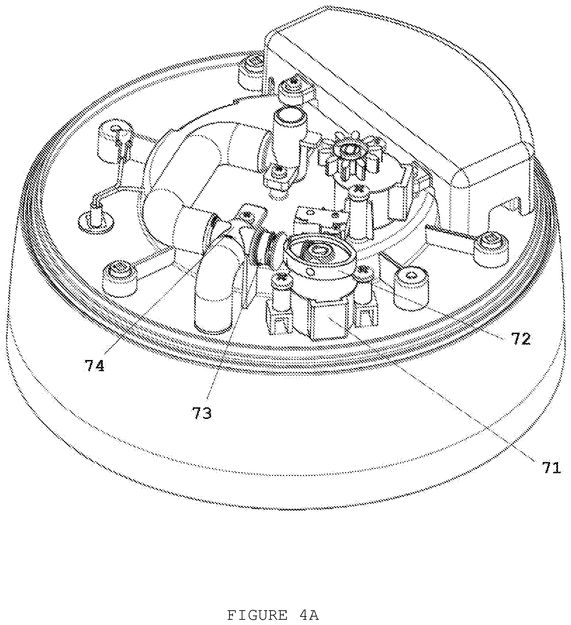

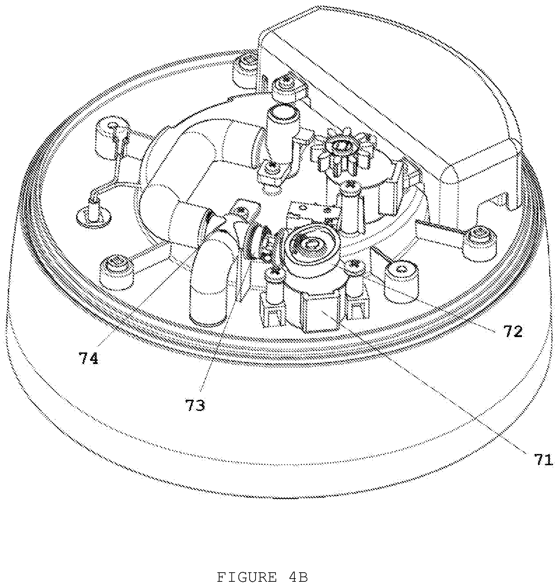

**Figure 4** shows a system (**7**) controlling water supply to the spout comprising a spout valve drive motor (**71**) for driving a spout valve cam (**72**) that pushes on a spout valve lever (**73**) to act on a spout valve body to control water flow.

Actions of the heating system, valve system and rotating spout system are closely correlated so that water to a specified temperature in the water tank will be promptly released into the coffee ground in a manner similar to manual pour over.

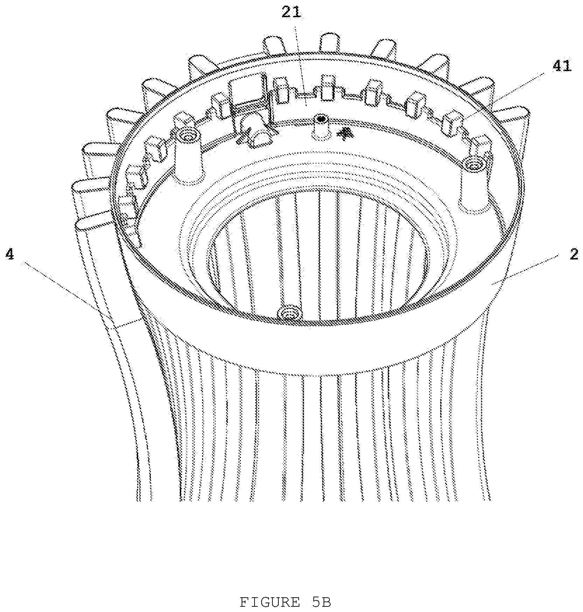

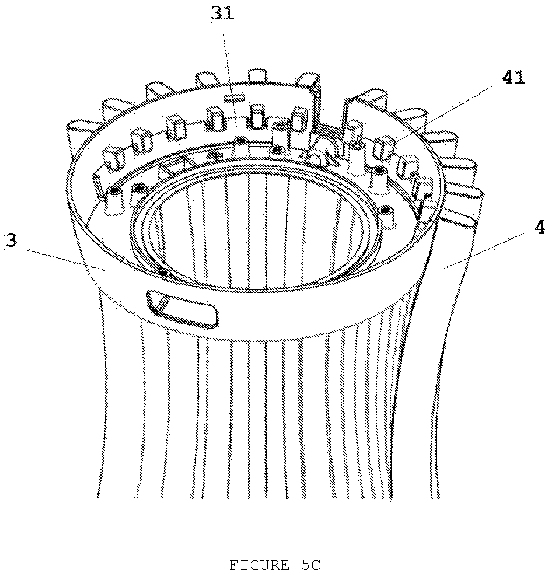

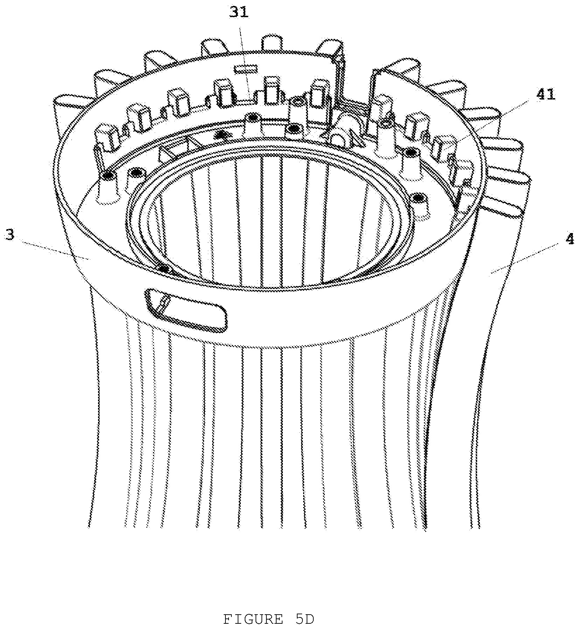

**Figure 5** shows how the plurality of connecting elements connects to the top housing and lower housing. Each top or bottom housing will have a plurality of holes corresponding to each of the plurality of connecting elements. Each connecting element will have a hook-like feature **(41)** to be inserted into each of the holes in the top or bottom housing. Within the top or bottom housing is a piece of interlock **(21, 31)** that can be moved to fit nicely into the space inside the hook **(4)** of the connecting elements to lock them in place. This design removes the need for using a mould for the housing so that it is cheaper and easier to produce. The type of materials that can be chosen for the housing can be easily varied, for example, wooden strips can be used as the plurality of connecting elements. This will not be possible with conventional coffee maker designs. Due to the spacing between each connecting element, light can shine through the housing into the carafe and a user can observe the brewing process clearly.

## Claims

1. A coffee maker comprising
a. a top housing (**2**) connected to a bottom housing (**3**) via a plurality of connecting elements (**4**) such that the top housing is enacted above the bottom housing;
b. a water tank (**1**) positioned on top of the top housing;
c. a carafe (**5**) to be placed under said top housing, said carafe comprises an upper part having a brewing cone (**51**); and
d. a rotating spout (**6**) located at the bottom of said top housing and above said carafe for pouring hot water into said carafe, **characterized in that**:
said plurality of connecting elements (4) are connected to said top housing and bottom housing by an interlock system; said interlock system comprises a hook-like feature (**41**) located on both ends of each of said plurality of connecting elements, a plurality of holes on said top housing and bottom housing corresponding to each of the plurality of connecting elements (**4**), and a piece of interlock (**21**) located adjacent to a wall of said top housing or bottom housing.

2. The coffee maker of claim 1, wherein the water tank is made of a transparent material.

3. The coffee maker of claim 1, wherein the water tank comprises a heating system, a valve and a temperature sensor, wherein when said temperature sensor detects a specified temperature, said heating system is turned off and said valve is opened to allow hot water flowing via said rotating spout.

4. The coffee maker of claim 1, wherein said rotating spout is driven by a motor when a temperature sensor detects a specified temperature in said water tank.

5. The coffee maker of claim 1, wherein said rotating spout is driven to rotate concentrically above said brewing cone.

6. The coffee maker of claim 1, wherein said rotating spout comprises an outlet which opens horizontally.

7. The coffee maker of claim 1, wherein said rotating spout comprises an outlet which opens diagonally.

8. The coffee maker of claim 1, wherein said bottom housing comprises a keep warm system.

9. The coffee maker of claim 1, wherein said plurality of connecting elements are made of wood, metal, glass, plastic, leather or die cast.

10. The coffee maker of claim 1, wherein said plurality of connecting elements are made of transparent material.

11. The coffee maker of claim 1, wherein said plurality of connecting elements are curved.

12. The coffee maker of claim 1, wherein said plurality of connecting elements are straight.

## Patentansprüche

1. Kaffeemaschine, umfassend
a. einen oberer Gehäuseteil (2), der über mehrere Verbindungselementen (4) mit einem unteren Gehäuseteil (3) verbunden ist, so dass der obere Gehäuseteil über dem unteren Gehäuseteil angeordnet ist;
b. einen Wassertank (1), der auf dem oberen Gehäuseteil positioniert ist;
c. eine Karaffe (5), die unter dem oberen Gehäuseteil zu platzieren ist, wobei die Karaffe einen oberen Teil mit einem Brühtrichter (51) umfasst;
und
d. einen drehbaren Auslaufstutzen (6), der sich unterhalb des oberen Gehäuseteils und über der Karaffe befindet, um heißes Wasser in die Karaffe zu gießen, **dadurch gekennzeichnet, dass**:
die mehreren Verbindungselemente (4) mit dem oberen Gehäuseteil und dem unteren Gehäuseteil durch ein Einrastsystem verbunden sind; wobei das Einrastsystem ein hakenartiges Bauteil (41) umfasst, das sich an beiden Enden eines jeden der mehreren Verbindungselemente befindet, mehrere Löcher an dem oberen Gehäuseteil und dem unteren Gehäuseteil, die jedem der mehrere Verbindungselemente (4) entsprechen, und ein Teil der Einrastung (21), der benachbart zu einer Wand des oberen Gehäuseteils oder des unteren Gehäuseteils angeordnet ist.

2. Kaffeemaschine nach Anspruch 1, wobei der Wassertank aus einem transparenten Material besteht.

3. Kaffeemaschine nach Anspruch 1, wobei der Wassertank ein Heizsystem, ein Ventil und einen Temperatursensor umfasst, wobei, wenn der Temperatursensor eine bestimmte Temperatur erfasst, das Heizsystem ausgeschaltet und das Ventil geöffnet wird, um den Durchfluss von heißem Wasser durch den drehbaren Auslaufstutzen zu ermöglichen.

4. Kaffeemaschine nach Anspruch 1, wobei der drehbare Auslaufstutzen von einem Motor angetrieben wird, wenn ein Temperatursensor eine bestimmte Temperatur im Wassertank erfasst.

5. Kaffeemaschine nach Anspruch 1, wobei der drehbare Auslaufstutzen angetrieben wird, um sich konzentrisch über dem Brühtrichter zu drehen.

6. Kaffeemaschine nach Anspruch 1, wobei der drehbare Auslaufstutzen einen Auslass umfasst, der sich horizontal öffnet.

7. Kaffeemaschine nach Anspruch 1, wobei der drehbare Auslaufstutzen einen Auslass umfasst, der sich diagonal öffnet.

8. Kaffeemaschine nach Anspruch 1, wobei der untere Gehäuseteil ein Warmhaltesystem umfasst.

9. Kaffeemaschine nach Anspruch 1, wobei die mehreren Verbindungselemente aus Holz, Metall, Glas, Kunststoff, Leder oder Druckguss bestehen.

10. Kaffeemaschine nach Anspruch 1, wobei die mehreren Verbindungselemente aus transparentem Material bestehen.

11. Kaffeemaschine nach Anspruch 1, wobei die mehreren Verbindungselemente gekrümmt sind.

12. Kaffeemaschine nach Anspruch 1, wobei die mehreren Verbindungselemente gerade sind.

## Revendications

1. Cafetière comprenant
a. un boîtier supérieur (2) relié à un boîtier inférieur (3) par l'intermédiaire d'une pluralité d'éléments de liaison (4) de sorte que le boîtier supérieur est placé au-dessus du boîtier inférieur ;
b. un réservoir d'eau (1) positionné sur la partie supérieure du boîtier supérieur ;
c. une carafe (5) à placer sous ledit boîtier supérieur, ladite carafe comprend une partie supérieure ayant un cône à infusion (51) ; et
d. un bec rotatif (6) situé au fond dudit boîtier supérieur et au-dessus de ladite carafe pour verser de l'eau chaude dans ladite carafe, **caractérisée en ce que** :
ladite pluralité d'éléments de liaison (4) sont reliés audit boîtier supérieur et audit boîtier inférieur par un système de verrouillage ; ledit système de verrouillage comprend un élément de type crochet (41) situé aux deux extrémités de chacun de ladite pluralité d'éléments de liaison, une pluralité de trous sur ledit boîtier supérieur et ledit boîtier inférieur correspondant à chacun de la pluralité d'éléments de liaison (4), et une pièce de verrouillage (21) située adjacente à une paroi dudit boîtier supérieur ou dudit boîtier inférieur.

2. Cafetière selon la revendication 1, dans laquelle le réservoir d'eau est fait d'un matériau transparent.

3. Cafetière selon la revendication 1, dans laquelle le réservoir d'eau comprend un système de chauffage, une vanne et un capteur de température, dans laquelle quand ledit capteur de température détecte une température spécifiée, ledit système de chauffage est arrêté et ladite vanne est ouverte pour permettre à l'eau chaude de s'écouler par l'intermédiaire dudit bec rotatif.

4. Cafetière selon la revendication 1, dans laquelle ledit bec rotatif est entraîné par un moteur quand un capteur de température détecte une température spécifiée dans ledit réservoir d'eau.

5. Cafetière selon la revendication 1, dans laquelle ledit bec rotatif est entraîné pour tourner de manière concentrique au-dessus dudit cône à infusion.

6. Cafetière selon la revendication 1, dans laquelle ledit bec rotatif comprend une sortie qui s'ouvre horizontalement.

7. Cafetière selon la revendication 1, dans laquelle ledit bec rotatif comprend une sortie qui s'ouvre en diagonale.

8. Cafetière selon la revendication 1, dans laquelle ledit boîtier inférieur comprend un système de maintien au chaud.

9. Cafetière selon la revendication 1, dans laquelle ladite pluralité d'éléments de liaison sont en bois, en métal, en verre, en plastique, en cuir ou moulés sous pression.

10. Cafetière selon la revendication 1, dans laquelle ladite pluralité d'éléments de liaison sont fait d'un matériau transparent.

11. Cafetière selon la revendication 1, dans laquelle ladite pluralité d'éléments de liaison sont incurvés.

12. Cafetière selon la revendication 1, dans laquelle ladite pluralité d'éléments de liaison sont droits.
